# EUROPEAN PATENT SPECIFICATION

(11) **EP 3 316 441 B1**
(45) Date of publication and mention of the grant of the patent: **03.07.2019**
(21) Application number: 16196013.3
(22) Date of filing: 27.10.2016
(51) Int. Cl.: H02J 7/00, G05F 1/56, G05F 1/648, H02M 3/04, H02M 3/00, H02J 7/34

(54) **METHOD FOR THE OPERATION OF A BUCK CONVERTER AS A POWER SOURCE FOR THE ELECTRONICS OF A BATTERY SYSTEM AND A BATTERY SYSTEM WITH A BUCK CONVERTER**
VERFAHREN ZUM BETREIBEN EINES ABWÄRTSWANDLERS ALS ENERGIEQUELLE FÜR DIE ELEKTRONIK EINES BATTERIESYSTEMS UND BATTERIESYSTEM MIT ABWÄRTSWANDLER
PROCÉDÉ DE FONCTIONNEMENT D'UN CONVERTISSEUR ABAISSEUR DE TENSION EN TANT QUE SOURCE D'ÉNERGIE POUR L'ÉLECTRONIQUE D'UN SYSTÈME DE BATTERIE ET SYSTÈME DE BATTERIE AVEC UN CONVERTISSEUR ABAISSEUR DE TENSION

(43) Date of publication of application: 02.05.2018
(73) Proprietor: Samsung SDI Co., Ltd., Giheung-gu Yongin-si, Gyeonggi-do 17084 (KR)
(72) Inventor: Hofer, Maximilian, 8230 Hartberg (AT); Korherr, Thomas, 8230 Hartberg (AT)
(74) Representative: Gulde & Partner

(56) References cited:
- US-A- 5 089 768
- US-A1- 2003 042 881
- US-A1- 2006 049 816
- LEANDER B HORMANN ET AL: "Evaluation of component-aware dynamic voltage scaling for mobile devices and wireless sensor networks", WORLD OF WIRELESS, MOBILE AND MULTIMEDIA NETWORKS (WOWMOM), 2011 IEEE INTERNATIONAL SYMPOSIUM ON A, IEEE, 20 June 2011 (2011-06-20), pages 1-9, XP032047731, DOI: 10.1109/WOWMOM.2011.5986184 ISBN: 978-1-4577-0352-2
- TEXAS INSTRUMENTS: "TPS65800 - SINGLE-CELL Li-ION BATTERY- AND POWER-MANAGEMENT IC", INTERNET CITATION, 1 September 2005 (2005-09-01), pages 1-98, XP007910112, Retrieved from the Internet: URL:http://www.datasheetarchive.com/pdf/Da tasheet-015/DSA00256564.pdf [retrieved on 2009-10-12]

## Description

### Field of the Invention

The present invention relates to a method for the operation of a buck converter as a power source for the electronics of a battery system. The method comprises the steps of operating the buck converter in a first mode in which the buck converter provides for a first output voltage and of receiving a first control signal.

### Technological Background

A rechargeable or secondary battery system differs from a primary battery system in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for hybrid vehicles and the like.

Today, many battery systems comprise a so called System Basis Chip which is used to support different functionalities of the battery system. Some of these functionalities are directed to the voltage supply around a microcontroller which is often part of the battery system as well. Usually, different supply voltage levels are provided for the microcontroller of the battery system by the System Basis Chip. For example, such supplied voltage levels can comprise a 5V AUX voltage or expressed in other words, a 5V voltage for an AUX-input, a 3.3V IO voltage and/or a 1.25V core voltage.

Such System Basis Chips usually require a power supply of 12V. As many battery systems provide for higher voltages, for example for a voltage of V_{BS} = 48V, a conversion of this higher voltage to the lower voltage (of e.g. 12V) for the power supply of the System Basis Chip is needed. Usually such a conversion of the voltage is performed via a so called buck converter which always has the same output voltage, converting e.g. an input voltage of 48V into an output voltage of 12V.

Additionally, complex relay driver circuits, often operable in a PWM- or a so called buck mode, come to use within battery systems of the state of the art, allowing for the operation of relays, enabling a safe separation of the terminals of the battery system from a load connected to the terminals.

However, the aforementioned converter and circuits, which are integrated within the battery system, are complex, comprise a plurality of components, consume a lot of energy - thus are not energy efficient - and are expensive.

The article by LEANDER B HORMANN ET AL: "Evaluation of component-aware dynamic voltage scaling for mobile devices and wireless sensor networks", WORLD OF WIRELESS, MOBILE AND MULTIMEDIA NETWORKS (WOWMOM), 2011 IEEE INTERNATIONAL SYMPOSIUM ON A, IEEE, 20 June 2011 (2011-06-20), pages 1-9, XP032047731, DOI: 10.1109/WOWMOM.2011.5986184 ISBN: 978-1-4577-0352-2 discloses a plurality of buck converters of which two are suitable and designed for a provision of different output voltages. US 2006/0049816 A1 discloses an apparatus for producing an output voltage Vo to power an electronic device.

US 5,089,768 relates to a power source circuit in which an output of a power source battery is converted by a voltage regulator constructed by a predetermined voltage regulating system.

### Summary of Invention

One or more of the drawbacks of the prior art could be avoided or at least reduced by means of the present invention as defined in the independent claim. Preferred embodiments are addressed in the dependent claims.

In particular, a method for the operation of a buck converter as a power source for the electronics of a battery system is provided. The method comprises the steps of: Operating the buck converter in a first mode in which the buck converter provides for a first output voltage. Receiving a first control signal via a receiver circuit or a transceiver circuit. Upon the reception of the first control signal, operating the buck converter in a second mode in which the buck converter provides for a second output voltage for the System Basis Chip of the battery system, wherein the first output voltage has a value of V₁ ∈ [a; b] and wherein the second output voltage has a value of V₂ ∈ [c; d], wherein b < c and wherein a = 6V, b = 10.5V, c = 10.8V and d = 13.2V.

In an example, one single buck converter is used to operate the System Basis Chip of a battery system with different output voltages. In more detail, the buck converter is operable in a first mode of operation which represents a Sleep Mode and in a second mode of operation which represents a Normal Mode. In the Sleep Mode, the first output voltage V₁ provided by the buck converter is lower than the second output voltage V₂ which is provided by the buck converter in the Normal Mode. Thus, it is not necessary to provide a battery system with two buck converters, as at least two different voltage levels can be provided for the electronics of the battery system, using only one single buck converter.

Expressed in other words, only one buck converter is used to support different components of the battery system, as for example a System Basis Chip or a transceiver circuit. The output voltage provided by the buck converter varies in dependence of the state or the mode of operation of the buck converter. This allows to reduce the total number of components that come to use within the battery system and provides for a more cost efficient and energy efficient realization of the power supply of the electronics of a battery system.

Preferably, the first output voltage V₁ is provided to a transceiver circuit of a battery system. Furthermore preferred, the first output voltage V₁ is provided to a receiver circuit of a battery system.

Preferably, the first control signal is received via a receiver circuit or a transceiver circuit connected to a bus system. Especially preferred, the first control signal is received via a Controller Area Network (CAN) transceiver circuit.

Preferably, the first output voltage has a value of V₁ ∈ [6V; 10.5V]. Furthermore preferred, the second output voltage has a value of V₂ ∈ [10.8V; 13.2V]. Moreover preferred, the second output voltage has a value of V₂ ∈ [11V; 13V]. In such an example, the output voltages which are provided by the buck converter in the first and second modes of operation correspond to the input voltages required by a transceiver circuit and by a System Basis Chip respectively, allowing for the buck converter to supply a first output voltage to a transceiver circuit in a Sleep Mode of the buck converter and to supply a second output voltage to a System Basis Chip of the battery system in a Normal Mode of the buck converter.

In a preferred example, the method further comprises the steps of receiving a second control signal and of operating the buck converter in a third mode upon the reception of the second control signal, wherein in the third mode of operation, the buck converter for a predetermined duration provides for a third output voltage, wherein the third output voltage has a value of V₃ ∈ [e; f], wherein d < e. In such an example of the method, the buck converter can also be used to provide for a third output voltage, e.g. for a relay driver. Thus, in such an example, also a relay driver can advantageously be omitted which saves costs, power consumption and increases the efficiency of the battery system. Preferably, the third mode represents a Relay Close Mode.

Preferably, e = 21.5V and f = 26.5V. Preferably, the third output voltage has a value of V₃ ∈ [21.5V; 26.5V]. Furthermore preferred, the third output voltage has a value of V₃ ∈ [22V; 26V]. In such an embodiment, the value of the voltage provided with the third output voltage of the buck converter is sufficient to close a relay coming to use within the battery system.

Preferably, the first output voltage has a value of V₁ ∈ [7V; 10V]. Furthermore preferred, the second output voltage has a value of V₂ ≈ 12V, even more preferred of V₂ = 12V. Moreover preferred, the third output voltage has a value of V₃ ≈ 24V, even more preferred of V₃ = 24V. Preferably, the predetermined duration has a value of T ∈ [90ms; 110ms]. Moreover preferred, the predetermined duration has a value of T = 100m. The typical closing time of a relay is 20ms. Thus, a sufficient value for the duration T is T ∈ [90ms; 110ms], especially T = 100ms, which assures the safe closure of a relay. Preferably, the predetermined duration has a value of T = 20ms, 25ms, 30ms, 35ms, 40ms, 45ms, 50ms, 55ms, 60ms, 65ms, 70ms, 75ms, 80ms, 85ms, 90ms, 95ms, 105ms, 110ms, 115ms, 120ms, 125ms, 130ms, 135ms, 140ms, 145ms or of T = 150ms.

In a preferred example, the method further comprises the step of operating the buck converter in the second mode after the predetermined duration. In such an example, the buck converter falls back into the Normal Mode, providing for a second output voltage of e.g. V₂ = 12V, after the relay has been closed.

In a preferred example, the first output voltage is generated via a pulse width modulation and/or has an alternating value. Preferably, the first output voltage alternates between the values of V₁ = 6V and of V₁ = 10V. In such an embodiment, the first mode of operation of the buck converter is a Burst Mode, allowing for an advantageous reduction of the sleep current, further increasing the energy efficiency of a battery system. Preferably, the sleep current has a value of Iₛₗₑₑₚ < 25 µA.

Furthermore, it is provided a battery system, comprising a plurality of battery cells and a buck converter. The buck converter comprises a first input terminal, connected to a first potential provided by the plurality of battery cells, a second input terminal, connected to a feedback circuit, and an output terminal, adapted to output an output voltage. Moreover, the battery system comprises a battery management circuit, connectable to the output terminal via a first switching element, wherein the feedback circuit comprises a second switching element connected in series to a first resistor, wherein the second switching element is adapted to electrically connect the second input terminal to a second potential of the battery system. Furthermore, the feedback circuit further comprises a third switching element connected in series to a second resistor, the third switching element also being adapted to electrically connect the second input terminal to the second potential of the battery system.

In such an example, different voltages can be provided for different components of the battery system, only using the buck converter realized within the battery system. Thus, the invention allows for a significant reduction of electronic components. Furthermore, several functionalities can be realized by only one buck converter. For example, the Power Supply of a System Basis Chip of the battery system, the Power Supply of a Relay Driver of the battery system, including the provision of a Power Safe Mode and the Power Supply for a Sleep Domain of the electronics of the battery system. Preferably, the first potential is the V_{DD} potential provided by the plurality of battery cells. Preferably, the V_{DD} potential has a value of 48V. Furthermore preferred, the V_{DD} potential has a value of V_{DD} ∈ [36V; 52V]. Moreover preferred, the second potential is a GND potential.

Preferably, the buck converter comprises components that at least in part are integrated within a System Basis Chip of the battery system. Furthermore preferred, at least some of the components of the buck converter are realized as an integrated circuit.

Preferably, the feedback circuit further comprises a fourth switching element connected in series to a third resistor, the fourth switching element being adapted to electrically connect the second input terminal to the second potential. In this example, more than two different output voltages can be provided by the buck converter.

In a preferred example, the buck converter further comprises a third input terminal that is connected to a timer circuit. Preferably, the timer circuit is a CMOS timer circuit. Preferably, the first terminal of a capacitor is electrically connected to the output terminal of the buck converter, wherein the second terminal of the capacitor is electrically connected to the second potential. The timer circuit allows for the recurring recharge of the capacitor during a Sleep Mode of the buck converter, which is also called a Sleep Mode Refresh. Preferably, when a recharge is not performed, the first, second, third and fourth switching elements are in an opened state.

Preferably, the timer circuit is adapted to alternatingly open and close the second switching element with a predefined frequency, causing the buck converter to provide for an alternating first output voltage, wherein the first output voltage has a value of V₁ ∈ [6V; 10,5V]. Preferably, the first output voltage is a pulse width modulated output voltage. In such an example, a Sleep Mode Refresh can easily be performed via the closure of the second switching element, providing for a feedback of the buck converter.

In a preferred example, the battery system further comprises a transceiver circuit, adapted to cause the first, second and fourth switching elements to be closed upon the reception of a first control signal, thereby causing the buck converter to output a second output voltage of V₂ ∈ [10.8V; 13.2V]. Moreover preferred, the battery management circuit is adapted to cause the first, second and fourth switching elements to be closed upon the reception of a first control signal via the transceiver circuit or via a receiver circuit of the battery system, thereby causing the buck converter to output a second output voltage of V₂ ∈ [10.8V; 13.2V]. In such an embodiment, the buck converter can be transferred from a Sleep Mode into a Normal Mode upon the reception of the first control signal, which represents a wakeup-signal. With such an embodiment, the buck converter can be used to provide for two different output voltages, wherein the higher second output voltage V₂ is only outputted when needed. Otherwise, the lower first output voltage V₁ is outputted which reduces the power consumption and thus increases the energy efficiency of the battery system.

Preferably, the battery management circuit is adapted to hold the first, second and fourth switching elements in a closed state when provided with the second output voltage. Furthermore preferred, the battery management circuit is adapted to hold the first, second and fourth switching elements in a closed state as long as it is provided with the second output voltage. In such an embodiment the Normal Mode is maintained by the battery management circuit as long as the second output voltage is outputted to the battery management circuit and as long as no other signal, as for example a timing signal, causes the battery management system to change the state of operation.

In a preferred example, the battery system further comprises a fifth switching element electrically connected to the output terminal of the buck converter and to a first terminal of a relay, the relay comprising a second terminal that is electrically connected to the second potential of the battery system. In such an example, also the relay can be operated using the same buck converter which allows for a further reduction of components and of power consumption, as a complex relay driver can be omitted.

Preferably, the transceiver circuit is adapted to cause the first, second, third, fourth and fifth switching element to be closed for a predetermined duration upon the reception of a second control signal, thereby causing the buck converter to provide the battery management circuit with a third output voltage of V₃ ∈ [21.5V; 26.5V]. Furthermore preferred, the battery management circuit is adapted to cause the first, second, third, fourth and fifth switching element to be closed for a predetermined duration upon the reception of a second control signal via the transceiver circuit or via a receiver circuit of the battery system, thereby causing the buck converter to provide the battery management circuit with a third output voltage of V₃ ∈ [21.5V; 26.5V]. Furthermore preferred, the predetermined duration has a value of T ∈ [90ms; 110ms], especially of T = 100ms, which assures the safe closure of a relay. Preferably, the predetermined duration has a value of T = 20ms, 25ms, 30ms, 35ms, 40ms, 45ms, 50ms, 55ms, 60ms, 65ms, 70ms, 75ms, 80ms, 85ms, 90ms, 95ms, 105ms, 110ms, 115ms, 120ms, 125ms, 130ms, 135ms, 140ms, 145ms or of T = 150ms.

Preferably, the buck converter is operated in the second mode of operation after the predetermined duration, providing for the second output voltage.

According to another aspect of the present disclosure, a vehicle including a battery system as defined above is provided.

Further aspects of the present invention could be learned from the dependent claims or the following description.

### Brief Description of the Drawings

Features will become apparent to those of ordinary skill in the art by describing in detail exemplary embodiments with reference to the attached drawings in which:
Fig. 1 Illustrates a first embodiment of a method according to an example,
Fig. 2 illustrates a second example of a method showing the output voltage of a buck converter used as a power source for the electronics of a battery system; and
Fig. 3 illustrates a first embodiment of a battery system according to the invention.

### Detailed Description of the Invention

Reference will now be made in detail to embodiments, examples of which are illustrated in the accompanying drawings. Effects and features of the exemplary embodiments will be described with reference to the accompanying drawings. In the drawings, like reference numerals denote like elements, and redundant descriptions are omitted. As used herein, the term "and/or" includes any and all combinations of one or more of the associated listed items. Further, the use of "may" when describing embodiments of the present invention refers to "one or more embodiments of the present invention."

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present invention.

In the following description of embodiments of the present invention, the terms of a singular form may include plural forms unless the context clearly indicates otherwise.

The present invention, may be embodied in various different forms, and should not be construed as being limited to only the illustrated embodiments herein. Rather, these embodiments are provided as examples so that this disclosure will be thorough and complete, and will fully convey the aspects and features of the present invention to those skilled in the art. Accordingly, elements and techniques that are not necessary to those having ordinary skill in the art for a complete understanding of the aspects and features of the present invention may not be described.

It will be understood that, although the terms "first," "second," "third," etc., may be used herein to describe various elements and/or components, these elements and/or components should not be limited by these terms. These terms are used to distinguish one element and/or component from another element and/or component. Thus, a first element and/or component described below could be termed a second element and/or component, without departing from the scope of the present invention.

It will be understood that when an element or component is referred to as being "on," "connected to," or "coupled to" another element or component, it can be directly on, electrically connected to, or electrically coupled to the other element or component, or one or more intervening elements or components may be present. In addition, it will also be understood that when an element or component is referred to as being "between" two elements or components, it can be the only element or component between the two elements or components, or one or more intervening elements or components may also be present.

The terminology used herein is for the purpose of describing particular embodiments only and is not intended to be limiting of the present invention. As used herein, the singular forms "a," "an," and "the" are intended to include the plural forms as well, unless the context clearly indicates otherwise. It will be further understood that the terms "comprises," "comprising," "includes," and "including," when used in this specification, specify the presence of the stated features, integers, operations, elements, and/or components, but do not preclude the presence or addition of one or more other features, integers, operations, elements, components, and/or groups thereof. As used herein, the term "and/or" includes any and all combinations of one or more of the associated listed items. Expressions such as "at least one of," when preceding a list of elements, modify the entire list of elements and do not modify the individual elements of the list.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5% of the value centered on the value.

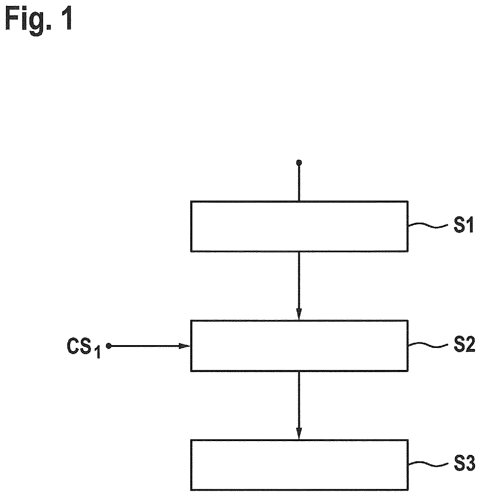

Figure 1 illustrates a first example of a method. The method illustrated in figure 1 is a method for the operation of a buck converter as a power source for the electronics of a battery system. The buck converter can be a separate component of the battery system or a component that is integrated within the battery system, for example a component that is integrated into the System Basis Chip of the battery system.

In this first example of the method, the method exemplarily comprises three steps. As a first step S₁, the buck converter is operated in a first mode in which the buck converter provides for a first output voltage V₁. In this first embodiment, the first mode is a so called Burst Mode which is a part of a so called Sleep Mode in that large parts of the battery system electronics are not active. In this first mode of operation of the buck converter, the first output voltage V₁ is provided by the buck converter at the output of the same to power a transceiver circuit which in this first example exemplarily is comprised by the electronics of the battery system. In this first embodiment, the first voltage V₁ exemplarily is an alternating voltage which in this first embodiment alternates between the values of V₁ = 6V and of V₁ = 10V to refresh a capacitor that powers a transceiver circuit. However, it is also possible to realize other embodiments of methods in which the first output voltage V₁ is a constant voltage, having a value of for example V₁ = 8V.

The transceiver circuit is also a part of the battery system electronics and is adapted to receive and transmit signals, especially control signals. In a second step of this first example of a method a first control signal CS₁ is received. In this first example, the first control signal CS₁ can be a wake up signal, for example a CAN wakeup signal, or an RTC wakeup signal.

In this first example, the transceiver circuit exemplarily receives the first control signal. However, the reception of the control signal can also be performed by any other component of the battery system that is adapted to receive a control signal, for example by a battery management circuit.

According to a third step S₃ the buck converter is operated in a second mode of operation upon the reception of the first control signal CS₁. In the second mode, the buck converter provides for a second output voltage V₂ for a System Basis Chip of the battery system. In this first example, the second mode is a Normal Mode in which large parts of the battery system electronics are active. In this first example, the second output voltage V₂ has a value of V₂= 12V. However, also other examples of the method with other second output voltages V₂ can be realized.

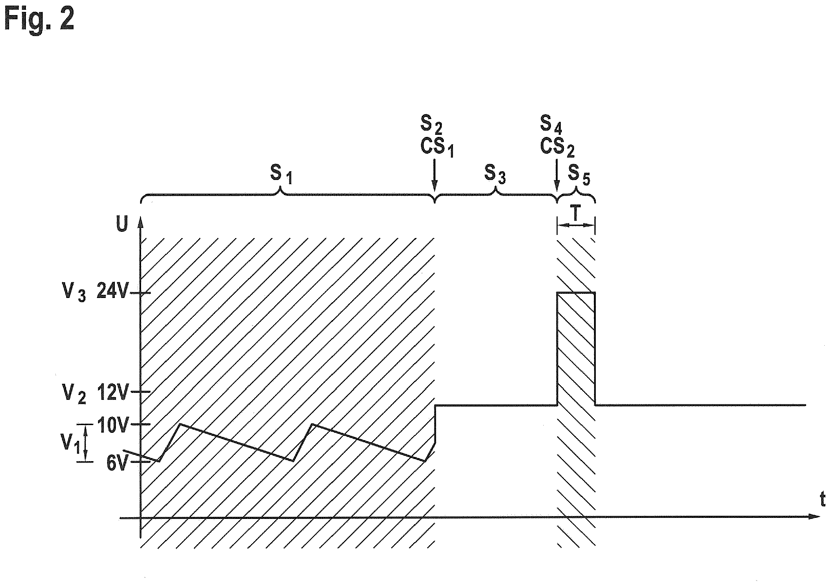

Figure 2 illustrates a second example of a method showing the output voltage of a buck converter used as a power source for the electronics of a battery system. In more detail, figure 2 shows a diagram illustrating the output voltage of the buck converter of a battery system which is operated according to a second example of a method. The ordinate of the diagram shows the output voltage of the buck converter, while the abscissa shows the time or duration a respective output voltage is supplied by the buck converter.

In this second example, the first three steps S₁ to S₃ of the method are identical to the steps as described with respect to the first example. Thus, in the first step S₁ of the second example of the method, the first output voltage V₁ is outputted via the buck converter. The first output voltage has a value V₁ that is alternating between a value of 6V and 10V over time, forming a saw tooth graph in the diagram shown in figure 2. Upon the reception of the first control signal CS₁ in the second step S₂ of the second example of the method, the buck converter is operated in a second mode, outputting a second output voltage V₂ of exemplarily 12V, which in figure 2 is illustrated as constant line.

In this second example, the method further comprises the steps of receiving S₄ a second control signal CS₂ and of operating the buck converter in a third mode S₅ upon the reception of the second control signal CS₂, wherein in the third mode of operation, the buck converter for a predetermined duration T provides for a third output voltage V₃. In this second example, the second control signal CS₂ can be a request for the closure of a relay, and the third mode is a so called Relay Close Mode. In this second example, the third output voltage V₃ exemplarily has a value of V₃ = 24V. Moreover, in this second example, the predetermined duration T exemplarily has a value of T = 100ms.

In figure 2, the third mode of operation is illustrated as a voltage pulse of a predefined length, allowing for the closure of a relay. After the pulse, the buck converter is transferred back into the Normal Mode/the first mode of operation, which is maintained until another control signal is received. Thus, all output voltages V₁ to V₃ shown in figure 2 are provided using the same buck converter, supplying different components of the electronics of the battery system with different voltages. However, in other examples of methods the voltages V₁ to V₃ can have values which are different from the values mentioned above and can also describe different graphs U(t) within a diagram.

Expressed in other words, at t=0, the buck converter is in a State Sleep Mode. The Burst Mode shown in step S₁ helps to reduce a sleep current. When a wakeup signal is received, for example a CAN wakeup signal, or an RTC wakeup signal, the buck converter goes into a state that represents a Normal Mode, see step S₂. If there is a request for the closure of a relay, the buck converter goes into a so called Relay Close Mode. The typical closing time is 20ms. This means a sufficient value for the time in this state is 100ms. After the relay is closed, the buck converter goes back into the state that represents a Normal Mode, the relay remains closed. During the Normal Mode and the Relay Close Mode, the System Basis Chip is working. The System Basis Chip can easily handle the aforementioned voltages, e.g. 12V and 24V, and has no influence to all other domains supplied by the System Basis Chip.

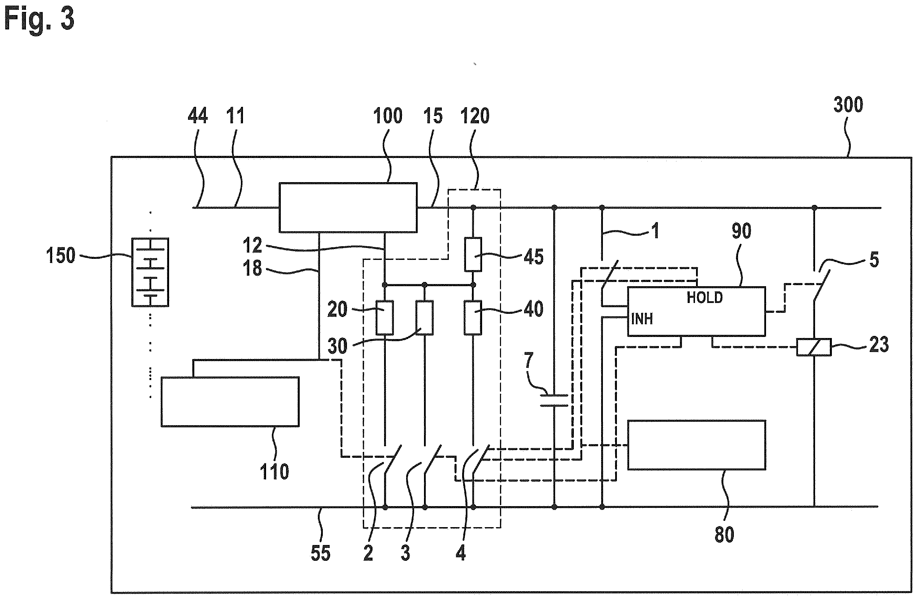

Figure 3 illustrates a first embodiment of a battery system 300 according to the invention.

The battery system 300 comprises a plurality of battery cells 150 which in figure 3 are only schematically indicated. In this first embodiment, the battery cells of the plurality of battery cells 150 are connected in series. However, in other embodiments, they can also be connected in parallel or in series and in parallel. Moreover, the battery system 300 comprises a buck converter 100 which in this first embodiment comprises a first input terminal 11, connected to a first potential 44 provided by the plurality of battery cells 150. In this first embodiment, the first potential 44 provided by the plurality of battery cells 150 is a V_{DD} potential that has a Value of V_{DD} ∈ [36V; 52V], in more detail of V_{DD} = 48V. However, the plurality of battery cells 150 can also be adapted to provide for a first potential 44 that has a value which differs from the values mentioned above. Furthermore, the battery system 300 comprises a second input terminal 12 that is connected to a feedback circuit 120, and an output terminal 15, adapted to output an output voltage. Furthermore, the battery system 300 comprises a battery management circuit 90, connectable to the output terminal 15 via a first switching element 1, wherein the feedback circuit 120 comprises a second switching element 2 connected in series to a first resistor 20, the second switching element 2 being adapted to electrically connect the second input terminal 12 to a second potential 55. In this first embodiment, the second potential 55 exemplarily is a GND potential.

The feedback circuit 120 further comprises a third switching element 3 connected in series to a second resistor 30, the third switching element 3 also being adapted to electrically connect the second input terminal 12 to the second potential 55. Moreover, the feedback circuit 120 further comprises a fourth switching element 4 connected in series to a third resistor 40, also the fourth switching element 4 being adapted to electrically connect the second input terminal 12 to the second potential 55. Thus, the feedback circuit 120 comprises three conductive paths comprising a resistor 20, 30, 40 and a switching element 2, 3, 4 respectively, the three conductive paths being connected in parallel. Furthermore, a further resistor 45 is connected in series to the aforementioned parallel connection and connected to the output terminal 15 of the buck converter 100.

In this embodiment, the buck converter 100 further comprises a third input terminal 18 that is electrically connected to a timer circuit 110, which in this embodiment is exemplarily realized as a CMOS Timer circuit that is adapted to alternatingly open and close the second switching element 2 with a predefined frequency f₁, causing the buck converter 100 to provide for an alternating first output voltage V₁, wherein the first output voltage V₁ has a value of V₁ ∈ [6V; 10V]. However, in other embodiments, the first output voltage V₁ may have a value of V₁ ∈ [6V; 10,5V], wherein acceptable tolerances for the output voltage V₁ are taken into account. In this embodiment, the battery system 300 further comprises a capacitor 7 that has a first terminal that is electrically connected to the output terminal 15 of the buck converter 100, wherein the second terminal of the capacitor 7 is electrically connected to the second potential 55. The timer circuit 110 allows for the recurring recharge of the capacitor 7 during a Sleep Mode of the buck converter 100, which is also called a Sleep Mode Refresh. Preferably, when a recharge is not performed, the first, second, third and fourth switching elements 1, 2, 3, 4 are in an opened state, causing the buck converter 100 to be operated in a Sleep Mode. Thus, in a Sleep Mode of the buck converter 100, all switches are in an open state. During the refresh of the capacitor 7, the second switching element 2 is closed, causing the buck converter 100 to perform a Sleep Mode Refresh. The current is stored within the capacitor 7. Every time after a predefined duration, for example after 1 second, the CMOS Timer circuit - which consumes a current of only some tens of nA during operation - switches on the buck converter 100 for a very short time to recharge the capacitor 7. The voltage at the output 15 of the buck converter 100 has to be higher than 5.5V. A sufficient value is between 7V and 10V. In order to activate the buck converter 100 and to perform the aforementioned Sleep Mode Refresh, the second switching element 2 is closed to have a feedback for the buck converter 100.

The battery system 100 further comprises a transceiver circuit 80, which in this embodiment exemplarily is a CAN transceiver circuit that is adapted to cause the first, second and fourth switching elements 1, 2, 4 to be closed upon the reception of a first control signal CS₁, thereby causing the buck converter 100 to output a second output voltage V₂ of V₂ ∈ [11V; 13V], in more detail to output a second output voltage V₂ = 12V. However, in other embodiments, the second output voltage V₂ may have a value of V₂ ∈ [10.8V; 13.2V], wherein acceptable tolerances of about +/- 10% for the second output voltage V₂ are taken into account. The battery management circuit 90 is adapted to hold the first, second and fourth switching elements 1, 2, 4 in a closed state when provided with the second output voltage V₂. Thus, when the CAN transceiver circuit detects a wakeup signal, a pin INH of the CAN transceiver circuit is transferred into a high state, causing the battery management circuit 90 to close the first, second and fourth switching elements 1, 2, 4 which causes the buck converter 100 to output the second output voltage V₂ of 12V. When the first, second and fourth switching elements 1, 2, 4 are closed, the buck converter 100 is operated in a so called Normal Mode. In other embodiments, the transceiver circuit 80 is adapted to directly switch/close the aforementioned switching elements 1, 2, 4. When the first, second and fourth switching elements 1, 2, 4 are transferred into a closed state, the battery management circuit 90 - together with other components of the electronics 200 of the battery system 300 - starts working. Furthermore, the battery management circuit 90 sets a HOLD output to stay in the Normal Mode.

Moreover, the battery system 300 further comprises a fifth switching element 5 electrically connected to the output terminal 15 of the buck converter 100 and to a first terminal of a relay 23, the relay 23 comprising a second terminal which is electrically connected to the second potential 55 of the battery system 300. The transceiver circuit 80 is adapted to cause the first, second, third, fourth and fifth switching element 1, 2, 3, 4, 5 to be closed for a predetermined duration T upon the reception of a second control signal CS₂, thereby causing the buck converter 100 to be operated in a so called Relay Close Mode and to provide the battery management circuit 90 with a third output voltage V₃ of V₃ ∈ [22V; 26V], in more detail of 24V. However, in other embodiments, the third output voltage V₃ may have a value of V₃ ∈ [21,5V; 26,5V], wherein acceptable tolerances of about +/- 10% for the third output voltage V₃ are taken into account.

Thus, if the buck converter 100 is operated in the Normal Mode with the relay 23 being in an opened state and the first, second and fourth switching elements 1, 2, 4 being in a closed state - which is also called "Normal Mode Relay off" - and there is a request to switch on the relay 23, the third and fifth switching elements 3, 5 are additionally switched on, thereby transferring the buck converter 100 into the Relay Close Mode for the aforementioned predetermined duration T. This causes the buck converter 100 to have another feedback which will cause the output terminal 15 of the buck converter 100 to rise to 24V. After the predetermined duration T - which in this embodiment is equal to some milliseconds - when the relay 23 has been switched on, the third switching element 3 can be switched off again, which will cause the output voltage at the output terminal 15 of the buck converter 100 to drop to a voltage of 12V again. Thus, the power consumption of the relay 23 is decreased due to a lower input (hold) voltage of 12V. This mode of operation of the buck converter 100, in which the first, second, fourth and fifth switching elements 1, 2, 4, 5 are in a closed state is also called "Normal Mode Relay on".

In this embodiment, a CMOS timer circuit 80 comes to use. However, in other embodiments, also a window comparator can be used to (alternatingly) switch on or off the buck converter 100.

The different states of the buck converter 100 which depend on the states of the first, second, third, fourth and fifth switching elements 1, 2, 3, 4, 5 in the aforementioned modes, namely the Sleep Mode (first mode of operation), the Sleep Mode Refresh, the Normal Mode (second mode of operation), Normal Mode Relay on, Normal Mode Relay off, and Relay Close (third mode of operation) can be seen in the following table:

| **Switch** | **Sleep Mode** | **Sleep Mode Refresh** | **Normal Mode Relay on** | **Normal Mode Relay off** | **Relay Close** |
|---|---|---|---|---|---|
| 1 | OFF | OFF | ON | ON | ON |
| 2 | OFF | ON | ON | ON | ON |
| 3 | OFF | OFF | OFF | OFF | ON |
| 4 | OFF | OFF | ON | ON | ON |
| 5 | OFF | OFF | ON | OFF | ON |

## Claims

1. A battery system (300), comprising:
a plurality of battery cells (150);
a buck converter (100), comprising
a first input terminal (11), connected to a first potential (44) provided by the plurality of battery cells (150),
a second input terminal (12), connected to a feedback circuit (120), which comprises a second switching element (2) connected in series to a first resistor (20), a third switching element (3) connected in series to a second resistor (30), and a third resistor (45) connected to the second input terminal (12),
a third input terminal (18) connected to a timer circuit (110),
an output terminal (15), adapted to output an output voltage and connected to the third resistor (45) of the feedback circuit (120); wherein the second switching element (2) is adapted to electrically connect the second input terminal (12) to a second potential (55) of the battery system (300), and wherein the third switching element (3) is adapted to electrically connect the second input terminal (12) to the second potential (55) of the battery system (300);
**characterized in that**,
the battery system (300) comprises a battery management circuit (90), connectable to the output terminal via a first switching element (1), wherein
the timer circuit (110) is adapted to alternatingly open and close the second switching element (2) with a predefined frequency (f₁), causing the buck converter (100) to provide for an alternating first output voltage (V₁).

2. The battery system (300) of claim 1, wherein the feedback circuit (120) further comprises a fourth switching element (4) connected in series to a fourth resistor (40), the fourth switching element (4) being adapted to electrically connect the second input terminal (12) to the second potential (55).

3. The battery system (300) of claim 1, wherein the first output voltage (V₁) has a value of V₁ ∈ [6V, 10.5V].

4. The battery system (300) of claim 2, further comprising a transceiver circuit (80), adapted to cause the first, second and fourth switching elements (1, 2, 4) to be closed upon the reception of a first control signal (CS₁), thereby causing the buck converter (100) to output a second output voltage (V₂) of V₂ ∈ [10.8V; 13.2V].

5. The battery system (300) of claim 4, wherein the battery management circuit (90) is adapted to hold the first, second and fourth switching elements (1, 2, 4) in a closed state when provided with the second output voltage (V₂).

6. The battery system (300) of one of the claims 1 to 5, further comprising a fifth switching element (5) electrically connected to the output terminal (15) of the buck converter (100) and to a first terminal of a relay (23), the relay (23) comprising a second terminal which is electrically connected to the second potential (55) of the battery system (300).

7. The battery system (300) of claims 5 and 6, wherein the transceiver circuit (80) is adapted to cause the first, second, third, fourth and fifth switching element (1, 2, 3, 4, 5) to be closed for a predetermined duration (T) upon the reception of a second control signal (CS₂), thereby causing the buck converter (100) to provide the battery management circuit (90) with a third output voltage (V₃) of V₃ ∈ [21.5V; 26.5V].

## Patentansprüche

1. Ein Batteriesystem (300), aufweisend:
eine Vielzahl von Batteriezellen (150);
einen Abwärtswandler (100), aufweisend:
einen ersten Eingangsanschluss (11), der mit einem ersten Potential (44), das von der Vielzahl der Batteriezellen (150) bereitgestellt wird, verbunden ist,
einen zweiten Eingangsanschluss (12), der mit einer Rückkopplungsschaltung (120) verbunden ist, die ein zweites Schaltelement (2), das mit einem ersten Widerstand (20) in Reihe geschaltet ist, ein drittes Schaltelement (3), das mit einem zweiten Widerstand (30) in Reihe geschaltet ist, und einen dritten Widerstand (45), der mit dem zweiten Eingangsanschluss (12) verbunden ist, aufweist,
einen dritten Eingangsanschluss (18), der mit einer Zeitgeberschaltung (110) verbunden ist,
einen Ausgangsanschluss (15), der angepasst ist, um eine Ausgangsspannung auszugeben, und mit dem dritten Widerstand (45) der Rückkopplungsschaltung (120) verbunden ist; wobei das zweite Schaltelement (2) angepasst ist, um den zweiten Eingangsanschluss (12) mit einem zweiten Potential (55) des Batteriesystems (300) elektrisch zu verbinden, und wobei das dritte Schaltelement (3) angepasst ist, um den zweiten Eingangsanschluss (12) mit dem zweiten Potential (55) des Batteriesystems (300) elektrisch zu verbinden;
**dadurch gekennzeichnet, dass**
das Batteriesystem (300) eine Batteriemanagementschaltung (90), die über ein erstes Schaltelement (1) mit dem Ausgangsanschluss verbunden werden kann, aufweist, wobei
die Zeitgeberschaltung (110) angepasst ist, um das zweite Schaltelement (2) mit einer vordefinierten Frequenz (f₁) alternierend zu öffnen und zu schließen, was bewirkt, dass der Abwärtswandler (100) eine alternierende erste Ausgangsspannung (V₁) bereitstellt.

2. Das Batteriesystem (300) nach Anspruch 1, wobei die Rückkopplungsschaltung (120) ferner ein viertes Schaltelement (4), das mit einem vierten Widerstand (40) in Reihe geschaltet ist, aufweist, wobei das vierte Schaltelement (4) angepasst ist, um den zweiten Eingangsanschluss (12) mit dem zweiten Potential (55) elektrisch zu verbinden.

3. Das Batteriesystem (300) nach Anspruch 1, wobei die erste Ausgangsspannung (V₁) einen Wert von V₁ ∈ [6V, 10,5V] aufweist.

4. Das Batteriesystem (300) nach Anspruch 2, ferner aufweisend eine Transceiver-Schaltung (80), die angepasst ist, um zu bewirken, dass das erste, zweite und vierte Schaltelement (1, 2, 4) bei Empfang eines ersten Steuersignals (CS₁) geschlossen werden, wodurch bewirkt wird, dass der Abwärtswandler (100) eine zweite Ausgangsspannung (V₂) von V₂ ∈ [10,8V; 13,2V] ausgibt.

5. Das Batteriesystem (300) nach Anspruch 4, wobei die Batteriemanagementschaltung (90) angepasst ist, um das erste, zweite und vierte Schaltelement (1, 2, 4) in einem geschlossenen Zustand zu halten, wenn sie mit der zweiten Ausgangsspannung (V2) versorgt wird.

6. Das Batteriesystem (300) nach einem der Ansprüche 1 bis 5, ferner aufweisend ein fünftes Schaltelement (5), das mit dem Ausgangsanschluss (15) des Abwärtswandlers (100) und mit einem ersten Anschluss eines Relais (23) elektrisch verbunden ist, wobei das Relais (23) einen zweiten Anschluss, der mit dem zweiten Potential (55) des Batteriesystems (300) elektrisch verbunden ist, aufweist.

7. Das Batteriesystem (300) nach den Ansprüchen 5 und 6, wobei die Transceiver-Schaltung (80) angepasst ist, um zu bewirken, dass das erste, zweite, dritte, vierte und fünfte Schaltelement (1, 2, 3, 4, 5) bei Empfang eines zweiten Steuersignals (CS₂) für eine vorbestimmte Zeitdauer (T) geschlossen werden, wodurch bewirkt wird, dass der Abwärtswandler (100) die Batteriemanagementschaltung (90) mit einer dritten Ausgangsspannung (V₃) von V₃ ∈ [21,5V; 26,5V] versorgt.

## Revendications

1. Système de batterie (300), comprenant :
une pluralité de cellules de batterie (150) ;
un convertisseur abaisseur de tension (100), comprenant
une première borne d'entrée (11), connectée à un premier potentiel (44) fourni par la pluralité de cellules de batterie (150),
une deuxième borne d'entrée (12), connectée à un circuit de rétroaction (120), qui comprend un deuxième élément de commutation (2) connecté en série à une première résistance (20), un troisième élément de commutation (3) connecté en série à une deuxième résistance (30), et une troisième résistance (45) connectée à la deuxième borne d'entrée (12),
une troisième borne d'entrée (18) connectée à un circuit de temporisation (110),
une borne de sortie (15), conçue pour délivrer en sortie une tension de sortie et connectée à la troisième résistance (45) du circuit de rétroaction (120) ;
où le deuxième élément de commutation (2) est conçu pour connecter électriquement la deuxième borne d'entrée (12) à un second potentiel (55) du système de batterie (300), et où le troisième élément de commutation (3) est conçu pour connecter électriquement la deuxième borne d'entrée (12) au second potentiel (55) du système de batterie (300) ;
**caractérisé en ce que**,
le système de batterie (300) comprend un circuit de gestion de batterie (90), apte à être connecté à la borne de sortie via un premier élément de commutation (1), dans lequel
le circuit de temporisation (110) est conçu pour ouvrir et fermer alternativement le deuxième élément de commutation (2) à une fréquence prédéfinie (f₁), ce qui amène le convertisseur abaisseur de tension (100) à fournir une première tension de sortie alternative (V₁).

2. Système de batterie (300) selon la revendication 1, dans lequel le circuit de rétroaction (120) comprend en outre un quatrième élément de commutation (4) connecté en série à une quatrième résistance (40), le quatrième élément de commutation (4) étant conçu pour connecter électriquement la deuxième borne d'entrée (12) au second potentiel (55).

3. Système de batterie (300) selon la revendication 1, dans lequel la première tension de sortie (V₁) a une valeur de V₁ E [6V, 10,5V].

4. Système de batterie (300) selon la revendication 2, comprenant en outre un circuit émetteur-récepteur (80), conçu pour amener les premier, deuxième et quatrième éléments de commutation (1, 2, 4) à se fermer lors de la réception d'un premier signal de commande (CS₁), ce qui amène le convertisseur abaisseur de tension (100) à délivrer en sortie une deuxième tension de sortie (V₂) de V₂ E [10,8V ; 13,2V].

5. Système de batterie (300) selon la revendication 4, dans lequel le circuit de gestion de batterie (90) est conçu pour maintenir les premier, deuxième et quatrième éléments de commutation (1, 2, 4) dans un état fermé lorsque la deuxième tension de sortie (V₂) lui est fournie.

6. Système de batterie (300) selon l'une des revendications 1 à 5, comprenant en outre un cinquième élément de commutation (5) électriquement connecté à la borne de sortie (15) du convertisseur abaisseur de tension (100) et à une première borne d'un relais (23), le relais (23) comprenant une seconde borne qui est électriquement connectée au second potentiel (55) du système de batterie (300) .

7. Système de batterie (300) selon les revendications 5 et 6, dans lequel le circuit émetteur-récepteur (80) est conçue pour amener les premier, deuxième, troisième, quatrième et cinquième éléments de commutation (1, 2, 3, 4, 5) à se fermer pendant une durée prédéterminée (T) lors de la réception d'un second signal de commande (CS₂), ce qui amène le convertisseur abaisseur de tension (100) à fournir au circuit de gestion de batterie (90) une troisième tension de sortie (V₃) de V₃ E [21,5V ; 26,5V].
